# EUROPEAN PATENT APPLICATION

(11) **EP 4 201 891 A1**
(43) Date of publication of application: **28.06.2023**
(21) Application number: 22215820.6
(22) Date of filing: 22.12.2022
(51) Int. Cl.: C02F 1/00

(54) **METHOD AND DEVICE FOR PROCESSING LIQUID WASTE OF INORGANIC COMPOSITION**

(30) Priority: 23.12.2021 BE 202106044
(71) Applicant: Indaver nv, 9130 Beveren (BE)
(72) Inventor: OPDENAKKER, Stefan, 9120 Beveren (BE)
(74) Representative: Brantsandpatents bv

(57) **Abstract**

The present invention relates to a method for processing liquid wastes of inorganic composition comprising placing liquid wastes in one or more storage tanks, supplying liquid wastes from one or more storage tanks to a first reactor vessel, adding reagents to the first reactor vessel for conversion of the liquid waste into solids, wherein sludge formed after conversion of the liquid waste is separated into a filter cake and a filtrate in at least one filter press. The invention also relates to a device comprising one or more storage tanks for the storage of liquid waste and a first reactor vessel, the first reactor vessel being connected to the one or more storage tanks via at least one pipe and the first reactor vessel comprising a feed for reagents, wherein the device comprises at least one filter press for filtering sludge from the first reactor vessel and a use of the method and/or device.

## Description

### TECHNICAL FIELD

The invention relates to a method and a device for processing liquid waste, more particularly liquid waste of inorganic composition.

### PRIOR ART

Liquid waste of inorganic composition can be very harmful to the environment. This concerns, for example, leachate from a landfill, excess sludge from wastewater treatment plants, rinsing water used to clean industrial installations, or wastewater. Such liquid wastes often contain acids, bases, heavy metals, cyanides, etc. All these components are very harmful and/or polluting, so that these liquid wastes cannot be discharged.

Therefore, these liquid wastes are processed to neutralize, oxidize, reduce or immobilize these harmful and/or polluting components. This happens, for example, in a reactor vessel. By adding reagents to the liquid waste, a reaction with the harmful and/or polluting components occurs, so that they are converted into a less and/or non-harmful or polluting component. A sediment or sludge forms in the reactor vessel. Although the harmful and/or polluting components in the reactor vessel have been converted into components that are less (or not) harmful and/or polluting, this sludge cannot be regarded as pure. This makes it necessary to store the sludge from the reactor vessel safely. This is particularly disadvantageous because it requires a large storage volume. An additional disadvantage is that this storage volume must be watertight, so that no water from the sludge can penetrate into the soil. Seeping water from the sludge can still contain components which, although less harmful and/or polluting than the components from the liquid waste, are harmful to the environment, in particular in large quantities.

CN109183118 describes a process for handling liquid waste in aluminum production. Liquid waste is transferred from a storage tank into a first reactor vessel. This known method has the drawback that reagents for processing the liquid waste are added to the liquid waste outside the first reactor vessel and are pumped back to the first reactor vessel together with the liquid waste. As a result, there is no maximum possible contact time between the reagents and the liquid waste and it is also possible that sludge is already formed outside the reactor vessel, which can clog or damage the pump.

The present invention aims to solve at least some of the above problems or drawbacks.

### SUMMARY OF THE INVENTION

In a first aspect, the present invention relates to a method according to claim 1.

This method is particularly advantageous because sludge formed after conversion of the liquid waste in the first reactor vessel is separated into a filter cake and into filtrate in at least one filter press. Due to the removal of the filtrate, the filter cake is much less bulky than the sludge, requiring less storage volume for safe storage of the filter cake compared to storage of the sludge. Filter cake is moreover suitable for further processing, depending on which components are still present in the filter cake. The filtrate can also be further purified, ultimately yielding water that can either be reused for internal processes or that can be discharged. It is not necessary to store the filtrate in a watertight volume.

It is also advantageous that by adding the reagents directly into the first reactor vessel, a maximum possible contact time between the reagents and the liquid waste is obtained. As a result, liquid waste can be processed as efficiently as possible and there is an optimal use of reagents. This also prevents sludge from being formed outside the first reactor vessel, which could clog or damage pumps.

Preferred embodiments of the method are set out in claims 2-9.

A specific preferred embodiment concerns a method according to claim 7.

This specific preferred embodiment is advantageous because continuous liquid waste flows gravitationally through successive reactor vessels. This is advantageous because as a result no energy is required to pump the liquid waste. This is additionally advantageous because it allows for easier and more controlled conversion of harmful and/or polluting components in the liquid waste to components that are less (or not) harmful and/or polluting by adding reagents specifically for the conversion of specific harmful and/or polluting components in each reactor vessel. A quantity of reagents can be adjusted in each reactor vessel depending on a quantity of the specific harmful and/or polluting components present. Another advantage is that, despite the fact that the liquid waste flows slowly through the successive reactor vessels, a larger amount of liquid waste can be processed per day than with conversion in a single reactor vessel.

In a second aspect, the present invention relates to a device according to claim 10. This device is advantageous for processing liquid waste materials with an inorganic composition, because the device comprises a filter press for filtering sludge from the first reactor vessel. This makes it possible to separate the sludge into a filter cake and into filtrate. This is beneficial because by removing filtrate the filter cake is much less voluminous than the sludge, so that less storage volume is required for safe storage of the filter cake. The filtrate can also be further purified, eliminating the need to store the filtrate in a watertight volume.

Preferred embodiments of the device are described in dependent claims 11-14.

In a third aspect, the present invention relates to a use according to claim 15.

This use results in an advantageous processing of leachate from a landfill, excess sludge from waste water treatment plants, rinse waters and wastewater, because harmful and/or polluting components in these liquid waste materials are converted into components that are less (or not) harmful and/or polluting, after which the resulting sludge is converted into a filter cake and a filtrate is separated. The filter cake requires less storage volume than the sludge and can be further processed depending on its composition. The filtrate can also be further purified, ultimately yielding water that can either be reused for internal processes or that can be discharged. It is not necessary to store the filtrate in a watertight volume.

### DESCRIPTION OF THE FIGURES

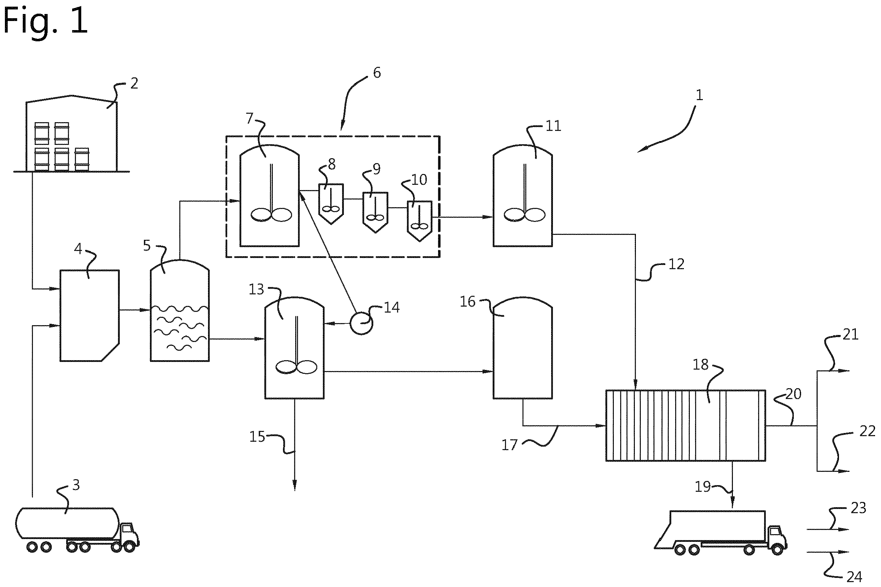

**Figure 1** shows an overview view of a device for processing liquid waste materials with an inorganic composition according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise", "comprising", "consist of", "consisting of", "provided with", "comprise", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a method for processing liquid waste materials with an inorganic composition.

In a preferred embodiment, the method comprises the steps of:
- placing liquid waste with an inorganic composition in one or more storage tanks;
- supplying liquid waste from one or more storage tanks to a first reactor vessel;
- adding reagents to the first reactor vessel for conversion of the liquid waste to solids.

The liquid waste materials are preferably poured into a catch pit. The catch pit is connected to the one or more storage tanks by one or more pipes. The liquid waste flows gravitationally through the one or more pipes from the catch pit to one or more storage tanks. Alternatively, the liquid waste is pumped from the catch pit through the one or more pipes to one or more storage tanks using a pump. The one or more pipes between the catch pit and the one or more storage tanks preferably comprise one or more valves. This is advantageous for selecting in which of the one or more storage tanks the liquid waste is placed.

The one or more storage tanks are connected to the first reactor vessel by means of one or more pipes. The liquid waste flows by gravity from one or more storage tanks through the one or more pipes to the first reactor vessel. Alternatively, the liquid waste is pumped from one or more storage tanks through the one or more pipes to the first reactor vessel using a pump. The one or more pipes between the one or more storage tanks and the first reactor vessel preferably comprise one or more valves. This is advantageous for selecting from which of the one or more storage tanks the liquid waste is supplied to the first reactor vessel. Liquid waste from several storage tanks that are compatible with each other and that can be processed in a similar manner can thus be jointly fed into the first reactor vessel, while incompatible liquid waste from several storage tanks can be avoided.

By adding reagents to the first reactor vessel, harmful and/or polluting components in the liquid waste are converted into components that are less (or not) harmful and/or polluting. To this end, the first reactor vessel comprises a feed for reagents. Non-limitative examples of conversion of harmful and/or polluting components in the liquid waste are the neutralization of acids and/or bases, oxidation of, for example, cyanide-containing waste and of nitrite, reduction of, for example, hexavalent chromium and immobilization of heavy metals.

Sludge is formed by converting harmful and/or polluting components in the liquid waste into components that are less (or not) harmful and/or polluting. For example, the sludge settles in the first reactor vessel. The sludge cannot be regarded as pure. The sludge formed after conversion of the liquid waste is separated into a filter cake and a filtrate in at least one filter press. The filter cake is a solid. The filtrate is a liquid in which solids may or may not still be present. The filter press is preferably directly or indirectly connected to the first reactor vessel via one or more pipes. The sludge is pressed under pressure through filter cloth in the filter press.

This method is particularly advantageous because, by removing the filtrate, the filter cake is much less bulky than the sludge, requiring less storage volume for safe storage of the filter cake compared to storage of the sludge. Filter cake is moreover suitable for further processing, depending on which components are still present in the filter cake. The filtrate can also be further purified, ultimately yielding water that can either be reused for internal processes or that can be discharged. It is not necessary to store the filtrate in a watertight volume.

It is also advantageous that by adding the reagents directly into the first reactor vessel, a maximum possible contact time between the reagents and the liquid waste is obtained. As a result, liquid waste can be processed as efficiently as possible and there is an optimal use of reagents. This also prevents sludge from being formed outside the first reactor vessel, which could clog or damage pumps.

According to an embodiment, the liquid waste materials are stored in drums in a drum storage prior to being placed in the one or more storage tanks. During processing, the drums are taken from the drum storage to the catch pit and poured into the catch pit. This embodiment is advantageous for the processing of liquid wastes originating from industrial processes where wastes are collected and stored in drums.

According to an embodiment, the liquid waste is poured directly from a tanker into the catch pit. This embodiment is advantageous for liquid waste that is stored in large quantities in, for instance, an external tank and is supplied by means of a tanker.

According to an embodiment, sodium hydroxide (NaOH) is added as a reagent to the first reactor vessel. NaOH is a strong base and therefore suitable for converting weak and strong acids into a sodium salt in a neutralization reaction.

According to an embodiment, sodium hypochlorite (NaClO) is added as a reagent to the first reactor vessel. NaClO is a strong oxidizer and is suitable for converting base metals, such as the heavy metal zinc (Zn), to its oxide, in this example zinc oxide (ZnO). NaClO is also suitable for converting toxic cyanides to corresponding cyanates. In this way, NaClO can be used to render cyanide-containing liquid waste harmless.

According to an embodiment, sodium thiosulfate (Na₂S₂O₃) is added as a reagent to the first reactor vessel. Na₂S₂O₃ is suitable for removing chlorine from solutions. Na₂S₂O₃ can also be used to render cyanide-containing liquid waste harmless.

According to an embodiment, sodium sulfide (Na₂S) is added as a reagent to the first reactor vessel. Na₂S is suitable for immobilization of metals, causing metals to precipitate.

According to an embodiment, sodium disulphite (NazSzOs) is added as a reagent to the first reactor vessel. NazSzOs is beneficial for reducing hexavalent chromium to trivalent chromium.

According to an embodiment, different reagents are added sequentially to the first reactor vessel. This is advantageous if different harmful and/or polluting components are present in the liquid waste, which require a different reagent to be converted into a less or non-harmful and/or polluting component. This is particularly advantageous if these reagents can also react with each other, which could prevent the conversion of harmful and/or polluting components to components that are less (or not) harmful and/or polluting.

According to an embodiment, different reagents are added simultaneously to the first reactor vessel. This is advantageous if different harmful and/or polluting components are present in the liquid waste, which require a different reagent to be converted into a less or non-harmful and/or polluting component. This is also advantageous if these reagents cannot or do not react sufficiently with each other, which could prevent the conversion of harmful and/or polluting components into components that are less (or not) harmful and/or polluting. This is particularly advantageous if several reagents are required to carry out different sequential reactions that convert the harmful and/or polluting components into components that are less (or not) harmful and/or polluting.

It will be apparent that this embodiment can be combined with the previous embodiment, where reagents are added to the first reactor vessel both sequentially and simultaneously at a certain time.

According to a preferred embodiment, the sludge is stored in a sludge tank before separation in the at least one filter press. In this embodiment, the first reactor vessel is preferably connected directly or indirectly to the sludge tank via one or more pipes. After reaction in the reactor vessel, the sludge flows to the sludge tank or is pumped to the sludge tank.

This embodiment is advantageous in case reactions between reagents and the harmful and/or polluting components have not yet been fully completed, which could possibly result in still harmful and/or polluting components not having been transformed in the sludge. Remaining in the sludge tank allows remaining reagents and harmful and/or polluting components to further react with each other while awaiting filtering of the sludge in the filter press.

According to a preferred embodiment, the filtrate from the at least one filter press is filtered using a lignite filter. The lignite filter is a fixed lignite filter or a temporary movable lignite filter. The lignite filter is preferably connected to the filter press by one or more pipes. It will be apparent to one skilled in the art that in the case of a temporary movable lignite filter, the one or more pipes between the lignite filter and the filter press can be disconnected. A lignite filter is advantageous for removal of possible organic components from the filtrate by adsorption.

According to a preferred embodiment, gases released during conversion of the liquid waste into solids are cleaned by gas scrubbing. This transformation releases heat and gases. Gases that are released may contain harmful and/or polluting components. By cleaning these gases by gas scrubbing, these harmful and/or polluting components are removed from the gases. Preferably, not only gases that are released in a reactor vessel, but also gases that are released in the one or more storage tanks, the catch pit or a sludge tank, as in a previously described embodiment, are collected and cleaned by gas scrubbing.

According to a further embodiment, the gas scrubbing is a basic gas scrubbing, in which sodium hydroxide (NaOH) is added to the gases to control the acidity. Optionally Calcium oxide (CaO) is added for removal of sulfur (S) from the gases. According to a preferred embodiment, the filtrate from the at least one filter press is purified in a water purification installation. This is particularly advantageous because it provides water that is sufficiently pure to be discharged or reused in internal processes.

According to an embodiment, iron chloride sulfate (FeCl(SO₄)) or iron(III) chloride (FeCl₃) is added to the filtrate when purifying the filtrate. FeCl(SO₄) or FeCl₃ is advantageous as a precipitant, to settle a substance in the filtrate, and as a flocculant, to form flocs of a substance, for example to eliminate phosphorus (P) from the filtrate.

According to an embodiment, sodium thiosulfate (Na₂S₂O₃) is added to the filtrate upon purification of the filtrate. Na₂S₂O₃ is suitable for removing chlorine (Cl) from the filtrate.

According to an embodiment, calcium oxide (CaO) or calcium dihydroxide (Ca(OH)₂) is added to the filtrate upon purification of the filtrate. CaO or Ca(OH)₂ is suitable for reducing the acidity of the filtrate. CaO or Ca(OH)₂ is also suitable for removing phosphates (PO₄³⁻) from the filtrate.

According to a preferred embodiment, the liquid waste materials are stirred in the first reactor vessel. This is advantageous for mixing added reagents with harmful and/or polluting components in the liquid waste, as a result of which the harmful and/or polluting components are converted better and faster into components that are less (or not) harmful and/or polluting, even if sludge has already formed in the first reactor vessel.

According to a further embodiment, the liquid waste flows through gravity from the first reactor vessel to at least two successive additional reactor vessels. The liquid wastes flow from the first reactor vessel to a first additional reactor vessel. The liquid wastes flow from the first additional reactor vessel to a second additional reactor vessel. It will be apparent that there may be more than two additional reactor vessels. The liquid wastes are stirred in the additional reactor vessels.

This embodiment is advantageous because no energy is required to pump the liquid waste from reactor vessel to reactor vessel. This embodiment is also advantageous because it allows for easier and more controlled conversion of harmful and/or polluting components in the liquid waste to components that are less (or not) harmful and/or polluting by adding reagents specifically for the conversion of specific harmful and/or polluting components in each reactor vessel. A quantity of reagents can be adjusted in each reactor vessel depending on a quantity of the specific harmful and/or polluting components present. This results in a better dosing and use of the reagents. Harmful and/or polluting components are processed in several steps in the various reactor vessels, so that substantially less harmful and/or polluting components are not converted. Another advantage is that, despite the fact that the liquid waste flows slowly through the successive reactor vessels, a larger amount of liquid waste can be processed per day than with conversion in a single reactor vessel. It will be apparent that sludge formed in the additional reactor vessels is also separated into a filter cake and a filtrate in the at least one filter press.

According to a further embodiment, the liquid waste is supplied from the one or more storage tanks via a feed tank to the first reactor vessel.

The one or more storage tanks are connected to the feed tank by means of one or more pipes. The liquid waste flows gravitationally from one or more storage tanks through the one or more pipes to the feed tank. Alternatively, the liquid waste is pumped from one or more storage tanks through the one or more pipes to the feed tank using a pump. The one or more pipes between the one or more storage tanks and the feed tank preferably comprise one or more valves. This has similar advantages as previously described for piping between the one or more storage tanks and the first reactor vessel.

The liquid waste is stirred in the feed tank. This is advantageous to avoid sedimentation in the feed tank. This is also advantageous in order to obtain a good mixing of liquid waste if the liquid waste is supplied from several storage tanks to the feed tank. The liquid waste products preferably flow gravitationally to the first reactor vessel. The feed tank is advantageous for obtaining a steady flow of liquid waste through the first reactor vessel and the at least two additional reactor vessels.

According to a preferred embodiment, before processing the liquid wastes, different liquid wastes are tested for reactivity and compatibility.

The liquid wastes are mixed with various products before processing. Non-limiting examples are water as a solvent, HCl as an acid, NaOH as a base, a polar solvent such as acetone, a halogenated solvent such as CH₂Cl₂, an apolar solvent such as hexane. It is tested whether there are temperature rises, whether there is gas formation, whether there is precipitation, ... both during and after mixing. This is important in order to determine whether mutual reactions can be expected if different liquid wastes are simultaneously fed into the first reactor vessel or the feed tank.

Different liquid wastes are also brought into contact with each other. Incompatible liquid waste products will then react with each other, mix or just separate. For example, mixing or separating is important because it can affect the uniform and complete conversion of harmful and/or polluting components in the liquid waste. For example, if incompatible liquid wastes separate, it is possible that layers are formed and that an added reagent is only present and reacts in a certain layer.

In a second aspect, the invention relates to a device for processing liquid waste materials with an inorganic composition.

According to a preferred embodiment, the device comprises one or more storage tanks for storing liquid waste and a first reactor vessel. The first reactor vessel is connected to the one or more storage tanks via at least one pipe. Preferably, the device comprises a pipe from each of the one or more storage tanks to the first reactor vessel. Preferably, a pipe from a storage tank to the first reactor vessel comprises a valve. This is advantageous for selecting from which of the one or more storage tanks liquid waste can be supplied to the first reactor vessel. Preferably, the device comprises at least one pump for pumping liquid waste from the one or more storage tanks to the first reactor vessel.

The first reactor vessel comprises a feed for reagents. The feed is a manual feed. Preferably, the feed is a controlled feed, whereby reagents can be added to the first reactor vessel from a distance. By adding reagents to the first reactor vessel, harmful and/or polluting components in the liquid waste are converted into components that are less (or not) harmful and/or polluting. Sludge is formed by converting harmful and/or polluting components in the liquid waste into components that are less (or not) harmful and/or polluting.

The device further comprises at least one filter press for filtering sludge from the first reactor vessel. The at least one filter press comprises a sludge feed and a filtrate outlet. The filter press is preferably directly or indirectly connected to the first reactor vessel via one or more pipes. The filter press preferably comprises a pump for pumping sludge under pressure through the filter cloth. The filter cloth is advantageous for retaining solid particles in the sludge, which form a filter cake on the filter cloth, and for allowing the passage of liquids, which are discharged as filtrate.

This device is advantageous because it is possible to separate the sludge into a filter cake and into filtrate. This is beneficial because by removing filtrate the filter cake is much less voluminous than the sludge, so that less storage volume is required for safe storage of the filter cake. The filtrate can also be further purified, eliminating the need to store the filtrate in a watertight volume.

According to an embodiment, the device comprises a catch pit. The catch pit is connected to the one or more storage tanks by one or more pipes. The device preferably comprises a pump for pumping liquid waste from the catch pit to the one or more storage tanks. The one or more pipes between the catch pit and the one or more storage tanks preferably comprise one or more valves. This is advantageous for selecting in which of the one or more storage tanks the liquid waste is placed. The catch pit is advantageous because by pouring liquid waste from drums or discharging a tanker into the catch pit, the at least one or more storage tanks can easily be filled. The catch pit preferably comprises an extraction installation for extracting gases. This is advantageous because as a result, gases that are released when the drums are poured or the tanker is discharged and which may contain harmful and/or polluting components, do not escape into the free air.

According to a preferred embodiment, the first reactor vessel comprises an agitator for stirring the liquid waste materials. The agitator comprises at least one agitator shaft, wherein the at least one agitator shaft has at least one agitator element positioned on it, such as, for example, wings. The agitator preferably comprises a motor, more preferably an electric motor, for driving the at least one agitator shaft. The agitator is advantageous for mixing added reagents with harmful and/or polluting components in the liquid waste, as a result of which the harmful and/or polluting components are converted better and faster into components that are less (or not) harmful and/or polluting, even if sludge has already formed in the first reactor vessel.

According to a further embodiment, the first reactor vessel is gravitationally connected to at least two successive additional reactor vessels. The first reactor vessel is gravitationally connected to a first additional reactor vessel. The first additional reactor vessel is gravitationally connected to a second additional reactor vessel. It will be apparent that the device may comprise more than two additional reactor vessels. The additional reactor vessels comprise an agitator for stirring the liquid wastes. The additional reactor vessels comprise a feed for reagents. The agitator and feed for reagents are similar to the agitator and feed for reagents of the first reactor vessel as in previously described embodiments.

This embodiment is advantageous because no energy is required to pump liquid waste from reactor vessel to reactor vessel. This embodiment is also advantageous because it allows for easier and more controlled conversion of harmful and/or polluting components in the liquid waste to components that are less (or not) harmful and/or polluting by adding reagents in a specific amount specifically for the conversion of specific harmful and/or polluting components in each reactor vessel.

According to a further embodiment, the device comprises a feed tank.

The feed tank is connected to the one or more storage tanks via at least one supply line. The device preferably comprises a pump for pumping liquid waste from the one or more storage tanks to the feed tank. The at least one supply line preferably comprises several valves. This has similar advantages as previously described for piping between the one or more storage tanks and the first reactor vessel.

The feed tank is connected to the first reactor vessel via a discharge line. Liquid waste materials preferably flow gravitationally from the feed tank to the first reactor vessel in the active state. The feed tank is advantageous for obtaining a steady flow of liquid waste through the first reactor vessel and the at least two additional reactor vessels.

The feed tank comprises an agitator for stirring the liquid wastes in the feed tank. The agitator is similar to an agitator in a reactor vessel, as in an embodiment previously described. An agitator is advantageous to avoid sedimentation in the feed tank. This is also advantageous in order to obtain a good mixing of liquid waste if liquid waste is supplied from several storage tanks to the feed tank.

According to a preferred embodiment, the device comprises a sludge tank for storing sludge from a reactor vessel. The sludge tank is connected to the at least one filter press via a pipe. The sludge is not only sludge from the first reactor vessel, but also from additional reactor vessels from a previously described embodiment.

A sludge tank is advantageous because during the residence of sludge in the sludge tank, reactions between reagents and harmful and/or polluting components in the sludge that were not yet fully completed in a reactor vessel can continue while waiting for the sludge to be filtered in the filter press.

According to an embodiment, the device comprises an extraction installation for extracting gases from a reactor vessel and a gas scrubbing installation for cleaning the gases. The extraction installation is connected to the gas scrubbing installation. Preferably, in the presence of a catch pit, as in an embodiment described above, the extraction installation of the catch pit is connected to the gas scrubbing installation. If a feed tank is present, the feed tank preferably comprises an extraction installation, wherein the extraction installation is connected to the gas scrubbing installation.

Gases that are released may contain harmful and/or polluting components. By cleaning these gases in the gas scrubbing installation, these harmful and/or polluting components are removed from the gases, so that these harmful and/or polluting components cannot escape into the free air.

One skilled in the art will appreciate that a method according to the first aspect is preferably performed using a device according to the second aspect and that a device according to the second aspect is preferably configured for performing a method according to the first aspect. Each feature described in this document, both above and below, can therefore relate to any of the three aspects of the present invention.

In a third aspect, the invention relates to a use of a method according to the first aspect and/or a device according to the second aspect for processing leachate from a landfill, excess sludge from waste water treatment plants, rinse waters, acids, bases, wastewater and cyanide-containing wastes.

This use results in an advantageous processing of leachate from a landfill, excess sludge from waste water treatment plants, rinse waters and wastewater, because harmful and/or polluting components in these liquid waste materials are converted into components that are less (or not) harmful and/or polluting, after which the resulting sludge is converted into a filter cake and a filtrate is separated. The filter cake requires less storage volume than the sludge and can be further processed depending on its composition. The filtrate can also be further purified, ultimately yielding water that can either be reused for internal processes or that can be discharged. It is not necessary to store the filtrate in a watertight volume.

In what follows, the invention is described by way of non-limiting figures illustrating the invention, and which are not intended to and should not be interpreted as limiting the scope of the invention.

### DESCRIPTION OF THE FIGURES

**Figure 1** shows an overview view of a device for processing liquid waste materials with an inorganic composition according to an embodiment of the present invention.

The device (1) comprises a catch pit (4). Liquid waste is poured from drums that are kept in a drum storage (2) into the catch pit (4). Alternatively, liquid waste is poured directly from a tanker (3) into the catch pit (4). The liquid waste goes from the catch pit (4) via one or more pipes to one or more storage tanks (5). Only one storage tank (5) is shown in Figure 1. From the storage tank (5) the liquid waste is supplied to a first reactor vessel (13). Reagents (14) are added to the first reactor vessel (13) to convert the liquid waste into solids. Herein, harmful and/or polluting components in the liquid waste are converted into components that are less (or not) harmful and/or polluting. The first reactor vessel (13) comprises an agitator for mixing the liquid wastes and the reagents (14). Sludge from the first reactor vessel (13) is stored in a sludge tank (16). Alternatively, at least part of the sludge can be discharged from the first reactor vessel (13) for processing (15). From the sludge tank (16), sludge (17) is separated into filtrate (20) and filter cakes (19) by means of the filter press (18). The filter cakes (19) are carried away and stored (23) or further thermally treated (24). The filtrate (20) is purified in a water purification installation, after which purified water (21) can be reused for internal processes or can be discharged. Any solids (22) in the filtrate (20), which have been removed from the filtrate (20) by, for example, precipitation or flocculation, may undergo further processing for solids (22). In an alternative embodiment (6), the liquid waste is supplied to the first reactor vessel (8) via a feed tank (7). The feed tank (7) comprises an agitator. The liquid waste flows by gravity from the first reactor vessel (8) to a first additional reactor vessel (9) and from the first additional reactor vessel (9) to a second additional reactor vessel (10). The first reactor vessel (8), the first additional reactor vessel (9) and the second additional reactor vessel (10) each comprise an agitator. Sludge from the second additional reactor vessel (10) is stored in a sludge tank (11). The sludge tank (11) comprises an agitator. Sludge (12) from the sludge tank (11) is separated into filter cakes (19) and filtrate (20) in the filter press (18).
The elements indicated in the figure are:
1. Device
2. Drum storage
3. Tanker
4. Catch pit
5. Storage tank
6. Alternative design first reactor vessel
7. Feed tank
8. First reactor vessel
9. First additional reactor vessel
10. Second additional reactor vessel
11. Sludge tank
12. Sludge
13. First reactor vessel
14. Reagents
15. Processing of sludge from the first reactor vessel
16. Sludge tank
17. Sludge
18. Filter press
19. Filter cakes
20. Filtrate
21. Purified water
22. Solids from filtrate
23. Storage of filter cakes
24. Thermal treatment of filter cakes

## Claims

1. Method for processing liquid waste of inorganic composition comprising:
- placing liquid waste with an inorganic composition in one or more storage tanks;
- supplying liquid waste from one or more storage tanks to a first reactor vessel;
- adding reagents to the first reactor vessel for conversion of the liquid waste to solids;
**characterized in, that** sludge formed after conversion of the liquid waste is separated into a filter cake and a filtrate in at least one filter press.

2. Method according to claim 1, **characterized in, that** the sludge before separation in the at least one filter press is kept in a sludge tank for further reaction with the added reactants.

3. Method according to claim 1 or 2, **characterized in, that** the filtrate from the at least one filter press is filtered with the aid of a lignite filter.

4. Method according to any of the preceding claims 1-3, **characterized in, that** gases released during conversion of the liquid waste into solids are cleaned by gas scrubbing.

5. Method according to any of the preceding claims 1-4, **characterized in, that** the filtrate from the at least one filter press is purified in a water purification installation.

6. Method according to any of the preceding claims 1-5, **characterized in, that** the liquid waste materials are stirred in the first reactor vessel.

7. Method according to claim 6, **characterized in, that** the liquid waste flows through gravity from the first reactor vessel to at least two successive additional reactor vessels, the liquid waste being stirred in the additional reactor vessels.

8. Method according to claim 7, **characterized in, that** the liquid waste is supplied from the one or more storage tanks via a feed tank to the first reactor vessel, liquid waste being stirred in the feed tank.

9. Method according to any of the preceding claims 1-8, **characterized in, that** before processing the liquid waste materials, different liquid waste materials are tested for reactivity and compatibility.

10. Device for processing liquid waste of inorganic composition, comprising one or more storage tanks for storing liquid waste and a first reactor vessel, the first reactor vessel being connected to the one or more storage tanks via at least one pipe and wherein the first reactor vessel has a feed for reagents **characterized in, that** the device comprises at least one filter press for filtering sludge from the first reactor vessel.

11. Device according to claim 10, **characterized in, that** the first reactor vessel comprises an agitator for stirring the liquid waste materials.

12. Device according to claim 11, **characterized in, that** the first reactor vessel is gravitationally connected to at least two successive additional reactor vessels, wherein the additional reactor vessels comprise an agitator for stirring the liquid waste materials and wherein the additional reactor vessels comprise a feed for reagents.

13. Device according to claim 12, **characterized in, that** the device comprises a feed tank, the feed tank comprising an agitator, the feed tank being connected to the one or more storage tanks via at least one supply line and to the first reactor vessel via a discharge line.

14. Device according to any of claims 10-13, **characterized in, that** the device comprises a sludge tank for storing sludge from a reactor vessel, the sludge tank being connected to the at least one filter press via a pipe.

15. Use of a method according to any of claims 1-9 and/or a device according to any of claims 10-14 for processing leachate from a landfill, excess sludge from waste water treatment plants, rinse waters and wastewater.
